# EUROPÄISCHE PATENTSCHRIFT

(11) **EP 0 597 196 B1**
(45) Veröffentlichungstag und Bekanntmachung des Hinweises auf die Patenterteilung: **02.10.1996**
(21) Anmeldenummer: 93113194.0
(22) Anmeldetag: 18.08.1993
(51) Int. Cl.: A01C 7/12

(54) **Sävorrichtung**
Seed drill
Semoir

(30) Priorität: 13.11.1992 DE 9215460 U
(43) Veröffentlichungstag der Anmeldung: 18.05.1994
(73) Patentinhaber: RABEWERK BERNBURG GmbH & Co., 06406 Bernburg (DE)
(72) Erfinder: Richter, Gerhard Dipl.-Ing., D-06429 Nienburg (DE)
(74) Vertreter: Missling, Arne, Dipl.-Ing.

(56) Entgegenhaltungen:
- DE-A- 3 827 220
- DE-C- 28 212
- FR-A- 1 272 898
- FR-A- 2 593 348
- FR-A- 2 602 118

## Beschreibung

Die Erfindung betrifft eine Sävorrichtung mit einem Nockensärad, das aus einem oder aus mehreren in Achsrichtung voneinander beabstandeten und miteinander starr verbundenen Nockenrädern mit umkehrbarer Drehrichtung besteht, und aus einer die mit Schöpfmulden versehenen Nocken der Nockenräder an einem Teil ihres Umfangs zumindest seitlich gegen das zu fördernde Saatgut abschließenden Abdeckung, die mit Abstreifzungen versehen ist, welche die seitlichen Öffnungen der Schöpfmulden in einer ersten Drehrichtung zunehmend abdecken, die einen Oberauslauf des Saatgutes und damit die Verwendung des Nockensärades als Feinsärad bewirkt, während eine zweite Drehrichtung einen Unterauslauf im Bereich einer an einem ortsfesten Gehäuse der Sävorrichtung schwenkbar befestigten Bodenklappe und damit die Verwendung des Nockensärades als Normalsärad bewirkt, bei dem die ausgebrachte Saatgutmenge durch eine Drehzahländerung des Nockensärades veränderbar ist.

Eine solche Sävorrichtung ist aus der DE-Offenlegungsschrift 38 27 220 A1 bereits bekannt. Beim Ausbringen von Feinsaatgut, beispielsweise Rapssamen, kommt es darauf an, geringe Mengen möglichst gleichmäßig verteilt auszubringen. Dazu dienen die Abstreifzungen, die dafür sorgen, daß sich in jeder Schöpfmulde nur ein einziges Saatkorn befindet, während überzähliges Saatgut in das Gehäuse der Sävorrichtung abgestreift wird. Es versteht sich, daß die Größe der Schöpfmulden der Korngröße des zu fördernden Saatgutes angepaßt sein muß, um eine solche Wirkung zu erzielen. Bei einer derartigen Anwendung der Sävorrichtung wird das Nockensärad im Oberauslauf betrieben, das heißt, daß das Saatgut in den Schöpfmulden über den oberen Zenit des Nockensärades transportiert wird und bei dessen weiterer Drehung aus den Schöpfmulden herausfällt, die sich in diesem Moment außerhalb des Bereiches der Bodenklappe befinden, so daß das Saatgut dem Ausgang des Gehäuses zugeführt wird. Auf diese Weise muß die Drehzahl des Nockensärades nicht zu stark verringert werden, um eine gleichmäßige Aussaat zu erzielen.

Die Einrichtung kann bei Drehrichtungsumkehr auch im Unterauslauf als Normalsärad betrieben werden. Voraussetzung dafür ist, daß die Abstreifzungen unterhalb des Saatgutspiegels die Zwischenräume zwischen den Nockenrädern möglichst wenig ausfüllen und die seitlichen Öffnungen der Schöpfmulden möglichst wenig überdecken, so daß auch zwischen den Nockenrädern Saatgut erfaßt und gefördert wird. Die Fördermenge hängt dann im wesentlichen von der Art des Saatgutes und der Drehzahl des Nockensärades ab. Man kann demzufolge die geförderte Saatgutmenge beeinflussen, wenn die Drehzahl des Nockensärades verändert wird.

Auf diese Weise ist die Einrichtung sowohl als Feinsärad als auch als Normalsärad zu gebrauchen. Es ist gelegentlich erwünscht, kleinere Saatgutmengen als mit dem Normalsärad ausbringbar zu fördern, die aber auch nicht so gering sind, daß für sie die Förderung mit dem Feinsärad einsetzbar wäre. Dafür ist die vorbekannte Sävorrichtung allerdings nicht geeignet, da die Drehzahl vom Feinsärad nicht beliebig erhöht und diejenige des Normalsärades nicht beliebig vermindert werden kann.

Die Erfindung hat sich demzufolge die Aufgabe gestellt, eine Sävorrichtung der eingangs näher bezeichneten Art so auszurüsten, daß Saatgutmengen ausbringbar sind, die sich zwischen den für das Feinsärad und den für das Normalsärad möglichen Förderleistungen bewegen.

Erfindungsgemäß wird die Aufgabe dadurch gelöst, daß die Abdeckung um die Drehachse des Nockensärades drehbar und in mindestens zwei Drehwinkelstellungen feststellbar ist. Dabei ist eine erste Drehwinkelstellung so vorgesehen, daß bei wirksamem Oberauslauf die Höhe der Abstreifzungen etwa am Niveau des von der Austrittsöffnung eines Saatgutbehälters abhängigen Saatgutspiegels beginnend in Drehrichtung zunimmt in der Weise, daß seitlich aus den Schöpfmulden vorstehendes Saatgut während der Drehung des Nockensärades abgestreift wird. Diese erste Drehwinkelstellung realisiert demzufolge die Anordnung eines Feinsärades. Eine zweite Drehwinkelstellung ist so vorgesehen, daß bei wirksamem Unterauslauf die Abstreifzungen weit in den der Bodenklappe gegenüberliegenden Bereich des Nockensärades reichen und dort die seitlichen Öffnungen der Schöpfmulden ganz oder teilweise abdecken und gleichenorts die Zwischenräume zwischen den Nockenrädern ausfüllen. Bei dieser Einstellung der Abdeckung entspricht die Anordnung demzufolge einem Särad, dessen geförderte Saatgutmenge sich zwischen der bei Feinsärädern üblichen und der bei Normalsärädern möglichen Saatgutmenge bewegt. Eine dritte Drehwinkelstellung ist so vorgesehen, daß bei wirksamem Unterauslauf die Abstreifzungen gänzlich oder zum wesentlichen Teil oberhalb des Saatgutspiegels angeordnet sind. Damit stehen die Zwischenräume zwischen den Nockenrädern für die Saatgutförderung zur Verfügung, und die Anordnung entspricht einem Normalsärad.

Das Anwendungsgebiet der Sävorrichtung ist damit bedeutend erweitert worden, so daß die Sävorrichtung nunmehr für alle praktisch vorkommenden Förderleistungen eingesetzt werden kann.

In einfacher Weise sind zur Realisierung der Drehwinkelstellungen Rastungen vorgesehen, wobei die Drehwinkelstellungen bestimmende erste Rastelemente an der Abdeckung und ein zugehöriges zweites Rastelement an dem Gehäuse vorgesehen sind. Das zweite Rastelement ist vorteilhafterweise an dem Gehäuse federnd befestigt. Es sind also ganz einfache mechanische Mittel völlig ausreichend, um, wie beabsichtigt, den Anwendungsbereich der Sävorrichtung wesentlich zu erweitern.

In einfacher Weise kann die Größe der Austrittsöffnung des Saatgutbehälters mittels eines Schiebers veränderbar gemacht werden, wobei die Anordnung so getroffen ist, daß der Saatgutspiegel durch die Unterkante des Schiebers bestimmt ist.

Die Erfindung löst die Aufgabenstellung in überraschend einfacher Weise und mit ganz wenigen, an einer Sävorrichtung des Standes der Technik anbringbaren mechanischen Mitteln. Dies kommt auch der Nachrüstbarkeit bereits vorhandener Anlagen zugute.

Die näheren Einzelheiten der Erfindung werden nachstehend anhand der Zeichnung an einem Ausführungsbeispiel näher erläutert. Es zeigen
- Fig. 1: eine erfindungsgemäße Sävorrichtung in teilweise geschnittener Seitenansicht,
- Fig. 2: eine Abdeckung aus Fig. 1, in der gleichen Ansicht,
- Fig. 3: eine Seitenansicht zu Fig. 2 und
- Fig. 4 und 5: zwei weitere Stellungen für das Säen in Unteraussaat,
sämtlich in vereinfachter Darstellung.

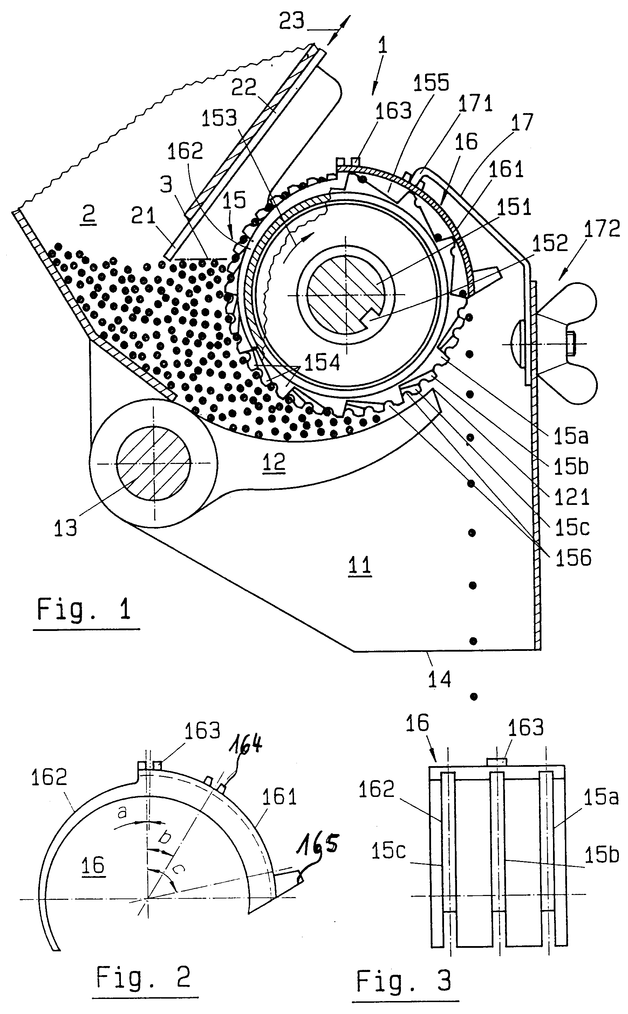

In Fig. 1 ist zunächst ein Gehäuse 11 einer Sävorrichtung 1 zu erkennen, dessen Seitenwand allerdings zum großen Teil abgebrochen ist. Dadurch wird zunächst eine Bodenklappe 12 sichtbar, die um eine gehäusegelagerte Achse 13 schwenkbar ist und deren in dem Gehäuse befindliche, frei schwenkbare äußere Kante 121 eine Begrenzung für das aus einer Öffnung 14 ausfallende Saatgut bildet. Die Bodenklappe ist im Uhrzeigersinn gegen eine Rückstellkraft schwenkbar und dabei so weit von dem Nockensärad entfernt, daß das Saatgut unbeschädigt gefördert und dabei die Bodenklappe 12 nicht verschwenkt wird.

Die Sävorrichtung 1 befindet sich an einem Saatgutbehälter 2, dessen Austrittsöffnung 21 mittels eines Schiebers 22 mehr oder weniger abdeckbar ist, wenn dieser in Richtung eines Pfeiles 23 bewegt wird.

Ein Nockensärad 15 ist an einer ortsfesten Achse 151 drehbar gelagert. Eine Paßfeder 152 veranschaulicht die drehfeste Verbindung. Ein Richtungspfeil 153 deutet an, daß das Nockensärad 15 in beiden möglichen Drehrichtungen betrieben werden kann. Entsprechend der Stellung des Schiebers 22 bewegt sich das Nockensärad 15 zu etwa zwei Dritteln unterhalb eines Saatgutspiegels 3.

Das Nockensärad 15 ist aus mehreren Nockenrädern zusammengesetzt, von denen in der Fig. 1 die Nockenräder 15a, 15b und 15c zu erkennen sind. Zwischen den Nockenrädern 15a, 15b, 15c usw., die voneinander beabstandet auf der Achse 151 angeordnet sind, befinden sich Zwischenräume, wobei vorteilehaft die Abstände von Nockenrad zu Nockenrad gleich sind. Alle Nockenräder 15a, 15b usw. sind auf ihrem äußeren Umfang mit Nocken 154 versehen, zwischen denen Lücken 155 verbleiben. Auf der im Uhrzeigersinn vorderen Stirnfläche der Nocken 154 sind Schöpfmulden 156 vorgesehen, die der Saatkorngröße angepaßt sind, wie sie bei einem Feinsärad erforderlich ist.

In der oberen Hälfte des Nockensärades 15 ist eine Abdeckung 16 vorgesehen, die in Fig. 1 teilweise weggebrochen dargestellt ist. Sie besteht aus einem Teil 161, der die Nocken 154 der Nockensäscheibe 15 vollständig abdeckt, und aus damit einstückigen Abstreifzungen 162, die im Gegenuhrzeigersinn die Nocken 154 zunehmend weniger abdecken und mit einer Spitze am Grunde der Lücken 155 auslaufen. Diese liegt bei der Verwendung der Sävorrichtung als Feinsärad etwas unterhalb des Saatgutspiegels 3. Am äußeren Umfang des Teiles 161 sind Rastausnehmungen 163,164 beziehungsweise ein Anschlag 165 vorgesehen, die zusammen mit einem korrespondierenden zweiten Rastelement 171 eine Rastung bilden und in verschiedenen Drehwinkeln a, b und c (Fig. 2) angeordnet sind und damit die Abdeckung 16 festlegen. Das Rastelement 171 ist an einer Rastfeder 17 befestigt, die am Gehäuse 11 ortsfest ist, hier mittels einer Schraubverbindung 172.

In Fig. 2 ist die Abdeckung 16 gezeigt, wobei auch die Drehwinkel a, b und c eingezeichnet sind. Schließlich ist in der Seitenansicht der Fig. 3 zu erkennen, daß die Abdeckung 16 die Zwischenräume zwischen den strichpunktiert angedeuteten Nockenrädern 15a, 15b und 15c ausfüllt.

In der Anordnung der Fig. 1 ist die Abdeckung zur Verwendung der Sävorrichtung als Feinsärad eingerichtet, wobei das Nockensärad im Uhrzeigersinn betrieben wird. Hierbei greift das Rastelement 171 in die Rastausnehmung 164. Die Abstreifzungen 162 sorgen dafür, daß jeweils nur ein Saatkorn in einer Schöpfmulde 156 förderbar ist.

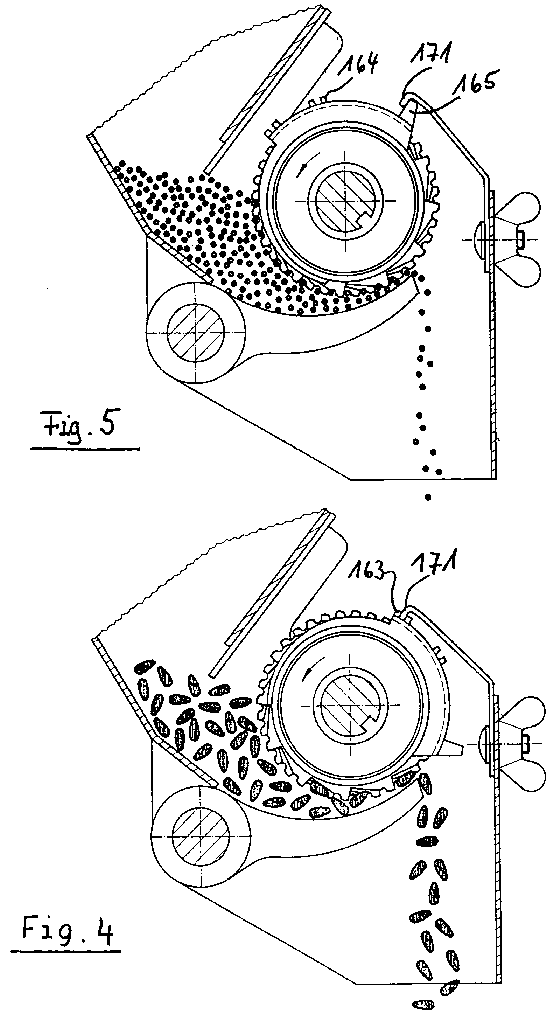

Wird das Nockensärad entgegen dem Uhrzeigersinn gedreht, so arbeitet die Sävorrichtung in Unteraussaat. Hierbei kann das Rastelement 171 mit den beiden Rastausnehmungen 163,164 oder aber mit dem Anschlag 165 zusammenwirken. In den Fig. 4 und 5 sind die beiden Extremstellungen dargestellt. In Fig. 4 greift das Rastelement 171 in die Rastausnehmung 163 ein, wobei der gesamte Zwischenraum zwischen den Nocken 154 des Särades 15 freigegeben werden. Hier wird die Stellung erhalten, an der eine größtmögliche Ausbringung an Saatgut erhalten wird. Bei Verschwenkung der Abdeckung entgegen dem Uhrzeigersinn, d.h. bei Verrastung des Rastelementes 171 mit der Rastausnehmung 164 oder beim Zusammenwirken mit dem Anschlag 165 wird die Ausbringung entsprechend verringert, so daß allein durch Umkehrung der Drehrichtung bzw. durch Verschiebung der Abdeckung 16 relativ zum Rastelement 171 vier unterschiedliche Ausbringmengen für das Saatgut eingestellt werden können. Diese vier Mengen sind dann noch in bekannter Art und Weise durch Variieren der Drehzahl veränderbar. Auf diese Weise ist es möglich, mit dem erfindungsgemäßen Nockensärad die Ausbringmengen des Saatgutes in einem sehr großen Bereich zu verändern.

## Patentansprüche

1. Sävorrichtung mit einem Nockensärad (15), das aus einem oder aus mehreren in Achsrichtung voneinander beabstandeten und miteinander starr verbundenen Nockenrädern (15a,15b,15c) mit umkehrbarer Drehrichtung besteht, und aus einer die mit Schöpfmulden (156) versehenen Nocken (154) der Nockenräder (15) an einem Teil ihres Umfangs zumindest seitlich gegen das zu fördernde Saatgut abschließenden Abdeckung (16), die mit Abstreifzungen (162) versehen ist, welche die seitlichen Öffnungen der Schöpfmulden (156) in einer ersten Drehrichtung zunehmend abdecken, die einen Oberauslauf des Saatgutes und damit die Verwendung des Nockensärades (15) als Feinsärad bewirkt, während eine zweite Drehrichtung einen Unterauslauf im Bereich einer an einem ortsfesten Gehäuse (11) der Sävorrichtung schwenkbar befestigten Bodenklappe (12) und damit die Verwendung des Nockensärades (15) als Normalsärad bewirkt, bei dem die ausgebrachte Saatgutmenge durch eine Drehzahländerung des Nockensärades veränderbar ist,
dadurch gekennzeichnet, daß
- die Abdeckung (16) um die Drehachse (151) des Nockensärades (15) drehbar und
- in mindestens zwei Drehwinkelstellungen (a;b;c) feststellbar ist.

2. Sävorrichtung nach Anspruch 1, dadurch gekennzeichnet, daß eine erste Drehwinkelstellung (b) so vorgesehen ist, daß bei wirksamem Oberauslauf die Höhe der Abstreifzungen (162) etwa am Niveau des von der Austrittsöffnung (21) eines Saatgutbehälters (2) abhängigen Saatgutspiegels (3) beginnend in Drehrichtung zunimmt in der Weise, daß seitlich aus den Schöpfmulden (156) vorstehendes Saatgut während der Drehung des Nockensärades (15) abgestreift wird.

3. Sävorrichtung nach Anspruch 1 und 2, dadurch gekennzeichnet, daß eine zweite Drehwinkelstellung (c) so vorgesehen ist, daß bei wirksamem Unterauslauf die Abstreifzungen (162) weit in den der Bodenklappe (12) zugewandten Bereich des Nockensärades (15) reichen und dort die seitlichen Öffnungen der Schöpfmulden (156) ganz oder teilweise abdecken und gleichen Orts die Zwischenräume zwischen den Nockenrädern (15a,15b;15c) ausfüllen.

4. Sävorrichtung nach Anspruch 1 bis 3, dadurch gekennzeichnet, daß eine dritte Drehwinkelstellung (a) so vorgesehen ist, daß bei wirksamem Unterauslauf die Abstreifzungen (162) gänzlich oder zum wesentlichen Teil oberhalb des Saatgutspiegels (3) angeordnet sind.

5. Sävorrichtung nach einem der Ansprüche 1 bis 4, dadurch gekennzeichnet, daß für die Drehwinkelstellungen (a;b;c) Rastungen (163;171) vorgesehen sind.

6. Sävorrichtung nach Anspruch 5, dadurch gekennzeichnet, daß die Drehwinkelstellungen (a;b;c) bestimmende erste Rastelemente (163) an der Abdeckung (16) und ein zugehöriges zweites Rastelement (171) an dem Gehäuse (11) vorgesehen sind.

7. Sävorrichtung nach Anspruch 6, dadurch gekennzeichnet, daß das zweite Rastelement (171) federnd an dem Gehäuse (11) befestigt ist.

8. Sävorrichtung nach einem der Ansprüche 2 bis 7, dadurch gekennzeichnet, daß die Austrittsöffnung (21) des Saatgutbehälters (2) mittels eines Schiebers (22) veränderbar ist.

9. Sävorrichtung nach Anspruch 8, dadurch gekennzeichnet, daß der Saatgutspiegel (3) durch die Unterkante des Schiebers (22) bestimmt ist.

## Claims

1. A seed drill with a cam seeding-wheel (15) comprising one or more cam wheels (15a, 15b, 15c), which are spaced from one another in the axial direction and are rigidly connected to one another and which are reversible in their direction of rotation, and a covering (16), which closes off the cams (154) ― provided with scoops (156) ― of the cam wheels (15) over part of their periphery at least on the [oposite] side from the seed material to be supplied and which is provided with wiper tongues (162) covering the lateral openings of the scoops (156) to an increasing extent in a first direction of rotation which causes the seed material to escape at the top and so causes the cam seeding-wheel (15) to be used as a fine seeding-wheel, whilst a second direction of rotation causes an escape at the bottom in the region of a base flap (12) pivotably secured to a stationary housing (11) of the seed drill and so causes the cam seeding-wheel (15) to be used as a normal seeding-wheel in which the quantity of seed material ejected can be varied by altering the rotational speed of the cam seeding-wheel, **characterized in that**
― the covering (16) is rotatable about the axis of rotation (151) of the cam seeding-wheel (15), and
― can be fixed in at least two rotational-angle settings (**a**; **b**; **c**).

2. A seed drill according to Claim 1, **characterized in that** a first rotational-angle setting (**b**) is provided in such a way that with an effective escape at the top the height of the wiper tongues (162) increases starting in the direction of rotation substantially at the level of the surface (3) of the seed material depending upon the outlet opening (21) of a seed-material container (2), in such a way that seed material projecting laterally out of the scoops (156) is brushed off during the rotation of the cam seeding-wheel (15).

3. A seed drill according to Claims 1 and 2, **characterized in that** a second rotational-angle setting (**c**) is provided in such a way that with an effective escape at the bottom the wiper tongues (162) extend far into the region of the cam seeding-wheel (15) facing the base flap (12), and there cover the lateral openings of the scoops (156) completely or in part and in the same place fill the interspaces between the cam wheels (15a; 15b; 15c).

4. A seed drill according to Claims 1 to 3, **characterized in that** a third rotational-angle setting (**a**) is provided in such a way that with an effective escape at the bottom the wiper tongues (162) are arranged completely or to a substantial extent above the surface (3) of the seed material.

5. A seed drill according to one of Claims 1 to 4, **characterized in that** catches (163; 171) are provided for the rotational-angle settings (**a**; **b**; **c**).

6. A seed drill according to Claim 5, **characterized in that** first catch members (163) determining the rotational-angle settings (**a**; **b**; **c**) are provided on the cover (16) and an associated second catch member (171) is provided on the housing (11).

7. A seed drill according to Claim 6, c**haracterized in that** the second catch member (171) is secured to the housing (11) in a resilient manner.

8. A seed drill according to one of Claims 2 to 7, **characterized in tha**t the outlet opening (21) of the seed-material container (2) is variable by means of a slide (22).

9. A seed drill according to Claim 8, **characterized in that** the surface (3) of the seed material is set by the lower edge of the slide (22).

## Revendications

1. Semoir comportant une roue de semoir à ergots (15), constituée d'une ou plusieurs roues à ergots (15a, 15b, 15c), placées à une certaine distance les unes des autres dans la direction axiale et reliées rigidement entre elles, avec la possibilité d'inverser le sens de rotation, et d'un capotage (16), isolant les ergots (154) de la semence à délivrer, sur une partie de la périphérie du capotage, au moins latéralement, ces ergots présentant des creux formant augets (156), de la roue de semoir à ergots (15), ce capotage (16) étant équipé de languettes déflectrices (162) qui recouvrent progressivement les ouvertures latérales des creux formant augets (156), dans un premier sens de rotation qui a pour effet de faire déverser la semence par le haut et, ainsi, permet d'utiliser la roue de semoir à ergots (15) comme une roue pour semence fine, tandis qu'un deuxième sens de rotation provoque un écoulement par le bas dans la zone d'un clapet de fond (12), fixé pivotant sur un carter fixe (11) du semoir, et permet donc d'utiliser la roue de semoir à ergots (15) comme roue de semoir normale, avec laquelle on peut modifier la quantité de semence éjectée en modifiant la vitesse de rotation de cette roue de semoir à ergots,
caractérisé en ce que
- le capotage (16) peut tourner autour de l'axe de rotation (151) de la roue de semoir à ergots (15), et
- peut être bloqué dans au moins deux réglages (a; b; c) de l'angle de rotation.

2. Semoir suivant la revendication 1, caractérisé en ce qu'il est prévu un premier réglage (b) de l'angle de rotation tel qu'en cas d'un déversement effectif par le haut, la hauteur des languettes déflectrices (162) augmente un peu, dans le sens de rotation, en commençant à partir du niveau supérieur de la semence (3), ce niveau dépendant de l'orifice de sortie (21) d'un réservoir à semences (2) de façon que de la semence dépassant latéralement des creux formant augets (156) soit enlevée par raclage pendant la rotation de la roue de semoir à ergots (15).

3. Semoir suivant la revendication 1 et la revendication 2, caractérisé en ce qu'il est prévu un deuxième réglage (c) de l'angle de rotation, tel qu'en cas d'un écoulement par le bas effectif, les languettes déflectrices (162) pénètrent largement dans la zone de la roue de semoir à ergots (15) tournée vers le clapet de fond (12), et, là, recouvrent, totalement ou en partie, les ouvertures latérales des creux formant augets (156), et, au mêmes endroits, remplissent les espaces intermédiaires situés entre les roues à ergots (15a; 15b; 15c).

4. Semoir suivant les revendications 1 à 3, caractérisé en ce qu'il est prévu un troisième réglage (a) de l'angle de rotation, tel qu'en cas d'un écoulement inférieur effectif, les languettes déflectrices (162) sont disposées complètement, ou pour une part importante, au dessus du niveau (3) de la semence.

5. Semoir suivant l'une des revendications 1 à 4, caractérisé en ce que, pour les réglages (a; b; c)) de l'angle de rotation, des dispositifs de blocage (163; 171) sont prévus.

6. Semoir suivant la revendication 5, caractérisé en ce que des premiers éléments de blocage (163) déterminant les réglages (a; b; c)) de l'angle de rotation sont prévus sur le capotage (16), et qu'un deuxième élément de blocage (171) associé est prévu sur le carter (11).

7. Semoir suivant la revendication 6, caractérisé en ce que le deuxième élément de blocage (171) est fixé de façon élastique, sur le carter (11).

8. Semoir suivant l'une des revendications 2 à 7, caractérisé en ce que l'orifice de sortie (21) du réservoir à semences (2) peut être modifié au moyen d'un volet coulissant (22).

9. Semoir suivant la revendication 8, caractérisé en ce que le niveau (3) de la semence est déterminé par l'arête inférieure du volet coulissant (22).
